# EUROPÄISCHE PATENTSCHRIFT

(11) **EP 3 317 564 B1**
(45) Veröffentlichungstag und Bekanntmachung des Hinweises auf die Patenterteilung: **11.03.2020**
(21) Anmeldenummer: 16725861.5
(22) Anmeldetag: 30.05.2016
(51) Int. Cl.: F16H 63/34, B60T 1/06, B60T 1/00, F16D 63/00

(54) **PARKSPERRGETRIEBE UND VERFAHREN ZUM BETREIBEN EINES PARKSPERRGETRIEBES EINES FAHRZEUGS**
PARKING LOCK GEAR MECHANISM, AND METHOD FOR OPERATING A PARKING LOCK GEAR MECHANISM OF A VEHICLE
MÉCANISME DE TRANSMISSION DE FREIN DE STATIONNEMENT ET PROCÉDÉ POUR FAIRE FONCTIONNER UN MÉCANISME DE TRANSMISSION DE FREIN DE STATIONNEMENT D'UN VÉHICULE

(30) Priorität: 03.07.2015 DE 102015008499; 22.12.2015 DE 102015226594
(43) Veröffentlichungstag der Anmeldung: 09.05.2018
(73) Patentinhaber: ZF Friedrichshafen AG, 88046 Friedrichshafen (DE)
(72) Erfinder: SPRATTE, Joachim, 49090 Osnabrueck (DE); SQUERI, Angela, 88094 Oberteuringen (DE); MAIR, Ulrich, 88046 Friedrichshafen (DE); LINDER, Michael, 88079 Kressbronn am Bodensee (DE)
(86) Internationale Anmeldenummer: PCT/EP2016/062186
(87) Internationale Veröffentlichungsnummer: WO 2017/005407

(56) Entgegenhaltungen:
- DE-A1- 10 046 589
- DE-A1-102013 213 707
- JP-A- 2003 185 018
- US-A- 4 817 463

## Beschreibung

Die vorliegende Erfindung bezieht sich auf ein Parksperrgetriebe sowie auf ein Verfahren zum Betreiben eines Parksperrgetriebes eines Fahrzeugs gemäß den Hauptansprüchen.

Steht bei Automatikgetrieben der Wählhebel auf "P", ist die Parksperre eingerastet und verhindert ein Wegrollen des Fahrzeuges. Die Parksperre kann über einen Seilzug vom Wählhebel angesteuert werden. Bei einigen Automatikgetrieben erfolgt das Ein- und Auslegen über eine interne hydraulische Vorsteuerung. Bei einigen Getrieben einer Parksperreinheit erfolgt das Betätigen auch über Elektromotoren. Bei diesen aktuiert ein Elektromotor über ein Getriebe die Parksperre und sichert bzw. entsichert so das Fahrzeug gegen Wegrollen. Bei zunehmend autonomisierten Fahrfunktionen und elektrifizierten Fahrzeugen werden elektrisch aktuierte Parksperren durchsetzen. Die Funktion "Parksperre" ist jedoch eine Sicherheitsfunktion, die bei dem Ausfall aller elektrischen Funktionen noch funktionieren sollte. Hierzu findet man in einigen technischen Lösungen Rückfallmechanismen, die z. B. über eine Feder die Parksperre einlegen. Diese Feder wird beim Auslegen der Parksperre gespannt. Das Spannen der Feder erhöht den Leistungsbedarf des Aktors jedoch erheblich. Dies verursacht erhöhte Kosten und einen erhöhten Bauraumbedarf.

Die japanische Patentveröffentlichung JP 2003 185018 A offenbart ein Parksperrgetriebe zum Betreiben einer Parksperreinheit eines Fahrzeugs, wobei das Parksperrgetriebe ein Planetengetriebe mit ein Sonnenrad, ein Hohlrad, und ein Planetenrad aufweist.

Die gattungsgemäße DE10046589A1 offenbart ein Stellvorrichtung für eine Getriebe mit einem Elektromotor. Die Kraftübertragung von dem Elektromotor EM auf eine Welle erfolgt durch ein als Zwischengetriebe dienendes Planetengetriebe, das auch als Umlaufgetriebe bezeichnet wird. Das Planetengetriebe besteht im wesentlichen aus einem Hohlrad mit einer Innenverzahnung, einem im Zentrum des Hohlrades HR drehbar angeordneten Sonnenrad mit einer Außenverzahnung sowie einem in dem Zwischenraum zwischen dem Hohlrad und dem Sonnenrad angeordneten Planetenrad, das drei drehbar gelagerte Planeten trägt.

Vor diesem Hintergrund schafft die vorliegende Erfindung ein verbessertes Parksperrgetriebe sowie ein verbessertes Verfahren zum Betreiben eines Parksperrgetriebes gemäß den Hauptansprüchen. Vorteilhafte Ausgestaltungen ergeben sich aus den Unteransprüchen und der nachfolgenden Beschreibung.

Es wird vorliegend ein Parksperrgetriebe zum Betreiben einer Parksperreinheit eines Fahrzeugs offenbart, wobei das Parksperrgetriebe die folgenden Merkmale aufweist: ein Planetengetriebe, das ein Sonnenrad, ein Hohlrad und zumindest ein mit dem Sonnenrad und dem Hohlrad kämmendes Planetenrad aufweist, wobei das zumindest eine Planetenrad an einem drehbar gelagerten Planetenträger befestigt ist;
eine Federeinheit, die mit dem Hohlrad gekoppelt ist, wobei die Federeinheit ausgebildet ist, um durch eine Drehung des Hohlrades gespannt zu werden und im gespannten Zustand ein Drehmoment und/oder eine Kraft auf das Hohlrad auszuüben; eine Hohlradfixierungseinheit, die ausgebildet ist, um in einem ersten Betriebszustand das Hohlrad gegen eine Drehung zu fixieren und in einem zweiten Betriebszustand eine Drehung des Hohlrades freizugeben; und
eine mit dem Planetenträger gekoppelte Arretierungseinheit, die ausgebildet ist, um bei einer Drehung des Planetenträgers die Parksperreinheit des Fahrzeugs zwischen einem Sperrzustand und einem Freigabezustand umzuschalten, insbesondere wobei der Sperrzustand einer am Fahrzeug eingelegten Parksperre entspricht und der Freigabezustand einer am Fahrzeug ausgelegten Parksperre entspricht.

Erfindungsgemäß umfasst die Arretierungseinheit ein Stangengetriebe mit exzentrisch ausgestalteter Verbindung zum Planetenträger, welches mit einem Stößel gekoppelt ist, sodass die Arretierungseinheit ausgebildet ist, um eine Drehung des Planetenträgers in eine lineare Bewegung des Stößels zu wandeln.

Erfindungsgemäß weist die Federeinheit eine Feder auf, die einerseits an einem Fixpunkt und andererseits an einem Anschlagspunkt am Hohlrad fixiert ist.

Unter einem Parksperrgetriebe kann ein beispielsweise mechanisches Getriebe verstanden werden, welches dazu ausgebildet ist, eine Einheit in einem Fahrzeug anzutreiben, die die Parksperr-Funktion realisiert. Unter einer Federeinheit kann eine Einheit verstanden werden, die zumindest ein teilweise reversibel verformbares Element wie eine Feder aufweist. Unter einer Hohlradfixierungseinheit kann eine Einheit verstanden werden, die steuerbar das Hohlrad fixieren oder feststellen kann. Unter einer Arretierungseinheit kann eine Einheit verstanden werden, die eine mechanische Führung eines Schaltelements der Parksperreinheit oder für die Parksperreinheit vornimmt.

Der hier vorgestellte Ansatz basiert auf der Erkenntnis, dass eine Parksperreinheit sehr klein und effizient realisiert oder hergestellt werden kann, wenn ein besonders ausgestaltetes Parksperrgetriebe zum Betätigen dieser Parksperreinheit verwendet wird. Hierbei kann insbesondere mit der Federeinheit bei einem Betätigen des Parksperrgetriebes das Hohlrad vorgespannt werden und diese Vorspannung durch die Hohlradfixierungseinheit in einem ersten Betriebszustand gehalten werden. Dennoch besteht die Möglichkeit, in einem zweiten Betriebszustand das Hohlrad wieder zur Drehung freizugeben, sodass es durch die Federeinheit wieder in eine ursprüngliche Ausgangslage zurückgesetzt wird. Auf diese Weise wird durch die Fixierung des Hohlrades bzw. die Freigabe des Hohlrades für eine Drehung eine Flexibilisierung schaffen, die insbesondere in modernen Fahrzeugen unter Verwendung von elektrischen oder elektronischen Komponenten bei Ausfall des Bordnetzes zur Realisierung einer Sicherheitsfunktion verwendet werden kann. Das Betätigen der Parksperreinheit kann dabei direkt durch eine Drehung des Planetenträgers und eine Übertragung dieser Drehung des Planetenträgers auf eine Komponente wie beispielsweise das vorstehend genannte Schaltelement der Parksperreinheit oder für die Parksperreinheit erfolgen.

Der hier vorgestellte Ansatz bietet den Vorteil, durch eine kleine Modifikation im Parksperrgetriebe eine deutlich verbesserte Funktionalität, insbesondere im Hinblick auf die Implementierung einer Sicherheitsfunktion in einer kritischen Situation beim Betrieb des Fahrzeugs, sicherstellen zu können. Diese Modifikation in Form der Federeinheit sowie der Hohlradfixierungseinheit lässt sich dabei einerseits durch die Verwendung von standardisierten und kleinen Bauelementen sehr kostengünstig implementieren und andererseits erfordert ein derart verändertes Parksperrgetriebe lediglich einen geringen zusätzlichen Bauraum, sodass ein solches Parksperrgetriebe auch an nahezu allen erforderlichen Positionen im Fahrzeug untergebracht werden kann.

Besonders vorteilhaft ist es, wenn in einer Ausführungsform des hier vorgestellten Ansatzes die Hohlradfixierungseinheit einen elektrischen Aktuator aufweist, der ausgebildet ist, um die Hohlradfixierungseinheit im strom- und/oder spannungslosen Zustand in den zweiten Betriebszustand zu bringen. Eine solche Ausführungsform des hier vorgeschlagenen Ansatzes bietet den Vorteil, dass bei Abfall einer Bordnetzspannung im Fahrzeug die Drehung des Hohlrades freigegeben wird, welches dann durch die Federeinheit in eine ursprüngliche Aussage zurückgezogen werden kann. Auf diese Weise lässt sich Sicherheitsfunktion implementieren, bei der der Abfall der Bordnetzspannung im Fahrzeug ein automatisches Verbringen der Parksperreinheit in den Betriebszustand "Parksperre" ermöglicht oder erleichtert.

Technisch sehr einfach auszuführen und kostengünstig zu implementieren ist eine Ausführungsform des hier vorgestellten Ansatzes, bei der der elektrische Aktuator ein Elektromagnet ist und/oder einen in das einen Zahnabschnitt des Hohlrades eingreifenden Vorsprung aufweist.

Erfindungsgemäß ist die Arretierungseinheit ausgebildet, um eine Drehung des Planetenträgers in eine lineare Bewegung eines Stößels zu wandeln. Durch eine solche Bewegungstransformation wird eine Bewegung des Stößels ermöglicht, die ein sehr sicheres und technisch einfaches Umschalten der Betriebsmodi der Parksperreinheit sicherstellt. Besonders vorteilhaft ist eine Ausführungsform des hier vorgeschlagenen Ansatzes, bei der die Arretierungseinheit ein Anschlagelement aufweist, das ausgebildet ist, um einen Bewegungsweg des Stößels zu begrenzen, wobei die Arretierungseinheit ferner ausgebildet ist, um bei einem Anliegen des Stößels an dem Anschlagelement den Planetenträger gegen eine Drehung zu fixieren. Ein solches Anschlagelement kann beispielsweise ein Abschnitt eine Gehäusewand des Parksperrgetriebes sein. Eine derartige Ausführungsform des hier vorgeschlagenen Ansatzes bietet den Vorteil, dass der Planetenträger sehr einfach gegen eine Verdrehung fixiert werden kann, indem beispielsweise das Sonnenrad weiter angetrieben oder gedreht wird, sobald der Stößel an dem Anschlagelement anliegt. In diesem Fall wird eine Bewegung des Planetenträgers unterbunden, sodass eine Bewegung vom Sonnenrad unter Vermittlung des zumindest einen Planetenrades auf das Hohlrad erfolgen kann, welches dann wiederum die Federeinheit oder eine Feder der Federeinheit spannen kann. Auf diese Weise lässt sich technisch sehr einfachen Mitteln ein sehr kleinteiliges Parksperrgetriebe fertigen, welches eine hohe Flexibilität in Bezug auf die durch dieses Getriebe zu realisierenden Funktionen aufweist.

Alternativ oder zusätzlich kann gemäß einer weiteren Ausführungsform des hier vorgeschlagenen Ansatzes der Stößel ausgebildet sein, um bei einer Bewegung in den Sperrzustand der Parksperreinheit einen Parksperrschalter in eine Sicherungsposition an zumindest einer Haltenase zu drücken und bei einer Bewegung in den Freigabezustand eine Bewegung des Parksperrschalters aus der Sicherungsposition heraus freizugeben. Eine derartige Ausführungsform bietet den Vorteil, dass einerseits der Parksperrschalter zuverlässig in den Sperrzustand der Parksperreinheit gebracht werden kann und andererseits dort auch sicher gehalten wird.

Von Vorteil ist ferner eine Ausführungsform des hier vorgeschlagenen Ansatzes, bei der der Stößel einen Konus oder ein Konuselement aufweist, der/das ausgebildet oder angeordnet ist, um sich an einer Haltewand abzustützen, um den Parksperrschalter in die Sicherungsposition zu drücken. Eine solche Ausführungsform bietet den Vorteil, dass durch die Verwendung der Haltewand in Verbindung mit dem Konus ein sehr leicht gängiges und ohne großen Kraftaufwand zu betätigendes Parksperrgetriebe realisiert werden kann. Zugleich kann sichergestellt werden, dass der Parksperrschalter zuverlässig und sicher in die Sicherungsposition verbracht werden kann und dort auch gehalten wird.

Technisch besonders einfach kann die Übertragung der Drehungsbewegung auf den Parksperrschalter der Parksperreinheit dann erfolgen, wenn gemäß einer Ausführungsform des hier vorgeschlagenen Ansatzes die Arretierungseinheit ein Schneckengetriebe aufweist.

Besonders günstig ist eine Ausführungsform des hier vorgestellten Ansatzes, bei dem eine mit dem Sonnenrad gekoppelte Antriebseinheit vorgesehen ist, insbesondere wobei die Antriebseinheit einen Elektromotor umfasst und/oder (beispielsweise zueinander verdrehungsfest) mit dem Sonnenrad verbunden ist und/oder wobei die Antriebseinheit im strom- oder spannungslosen Zustand eine Drehung des Sonnenrades sperrt. Hierdurch besteht die Möglichkeit, das Sonnenrad als immer als Antriebselement für das Planetengetriebe und den Planetenträger als Abtriebselement insbesondere in der besonders relevanten kritischen Situationen verwenden zu können, wobei das Hohlrad zur Implementierung der besonderen Sicherheitsfunktion, beispielsweise bei einem Ausfall des Bordnetzes des Fahrzeugs, verwendet werden kann. Auf diese Weise lässt sich mit konstruktiv sehr einfachen Maßnahmen ein räumlich kleines und dennoch zuverlässig arbeitendes Parksperrgetriebe schaffen.

Es gibt grundsätzlich zwei möglichkeiten, den Weg zwischen Parksperrengetriebe und Parksperrenmechanik im Getriebe zu überbrücken. Nämlich: Einmal mit einer rotatorischen Bewegung und einmal mit einer translatorischen Bewegung. Den rotatorischen Abtrieb kann man zum Beispiel über eine weitere Stirnradstufe realisieren. Den translatorischen Abtrieb kann beispielsweise über einen Excenter realisiert werden, der dann die Bewegung über einen Seilzug zum Getriebe überträgt. Technisch besonders günstig ist eine Ausführungsform, wenn die Antriebseinheit ein Schneckengetriebe zur Übertragung einer Drehbewegung auf das Sonnenrad aufweist. Eine solche Ausführungsform des hier vorgestellten Ansatzes bietet den Vorteil, dass durch die Selbsthemmung Schneckengetriebes bei einem Ausfall des Antriebs des Sonnenrades dieses nahezu fixiert werden kann, ohne dass hierzu eine zusätzliche Fixierungseinheit erforderlich wäre. Auf diese Weise lassen sich mechanisch vorgegebene Bedingungen von ausgewählten Komponenten vorteilhaft für den Bau eines kleinteiligen Planetengetriebes sowie dessen Betrieb einsetzen. Technisch sehr einfach und kostengünstig ist ebenfalls eine Ausführungsform des hier vorgeschlagenen Ansatzes, bei der die Federeinheit eine Schraubenfeder oder eine metallische Feder aufweist. Eine solche Schraubenfeder oder metallische Fehler weist einerseits eine hohe Rückstellkraft auf, ist in Bezug auf die Lebensdauer eines Fahrzeugs auch ausreichend langlebig und lässt sich technisch sicher und zuverlässig mit dem Hohlrad koppeln.

Die vorstehend genannten Vorteile und Realisierungen können auch in einer anderen Ausführungsform des hier vorgeschlagenen Ansatzes als Verfahren zum Betreiben einer Variante eines hier vorgestellten Parksperrgetriebes umgesetzt werden. Das Verfahren weist hierbei die folgenden Schritte auf:
Sperren einer Drehung des Planetenträgers;
Spannen der Federeinheit; und
Umschalten der Hohlradfixierungseinheit in den ersten Betriebszustand.

Ebenfalls ist auch eine Ausführungsform des hier vorgestellten Ansatzes als Parksperrgetriebesteuereinheit vorteilhaft, die eingerichtet ist, um die Schritte des Verfahrens in entsprechenden Einheiten auszuführen.

Ein solches Steuergerät oder eine solche Steuereinheit kann ein elektrisches Gerät sein, das elektrische Signale, beispielsweise Sensorsignale verarbeitet und in Abhängigkeit davon Steuersignale ausgibt. Das Steuergerät kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Der hier vorgestellte Ansatz wird nachfolgend anhand der beigefügten Figuren näher erläutert. Es zeigen:
Fig. 1 eine schematische Darstellung eines Fahrzeugs mit einem Parksperrgetriebe und einem Parksperrgetriebesteuergerät gemäß Ausführungsbeispielen der vorliegenden Erfindung;
Fig. 2 eine schematische Darstellung eines Parksperrgetriebes gemäß einem Ausführungsbeispiel des hier vorgestellten Ansatzes;
Fig. 3 eine schematische Darstellung des Parksperrgetriebes gemäß einem Ausführungsbeispiel des hier vorgestellten Ansatzes im ersten Betriebszustand der Hohlradfixierungseinheit;
Fig. 4 eine weitere schematische Darstellung eines Parksperrgetriebes gemäß einem Ausführungsbeispiel des hier vorgestellten Ansatzes im ersten Betriebszustand der Hohlradfixierungseinheit;
Fig. 5 eine schematische Darstellung des Parksperrgetriebes gemäß einem Ausführungsbeispiel des hier vorgestellten Ansatzes;
Fig. 6 ein Blockschaltbild der Parksperrgetriebesteuereinheit gemäß einem Ausführungsbeispiel des hier vorgestellten Ansatzes im Zusammenwirken mit der Hohlradfixierungseinheit sowie der Antriebseinheit;
Fig. 7 ein Ablaufdiagramm eines Ausführungsbeispiels des hier vorgestellten Ansatzes als Verfahren; und
Fig. 8A bis 8C schematische Darstellungen von Schaltplänen eines Pakrsperrgetriebes gemäß einem Ausführungsbeispiel des hier vorgestellten Ansatzes in unterschiedlichen Betriebsmodi.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

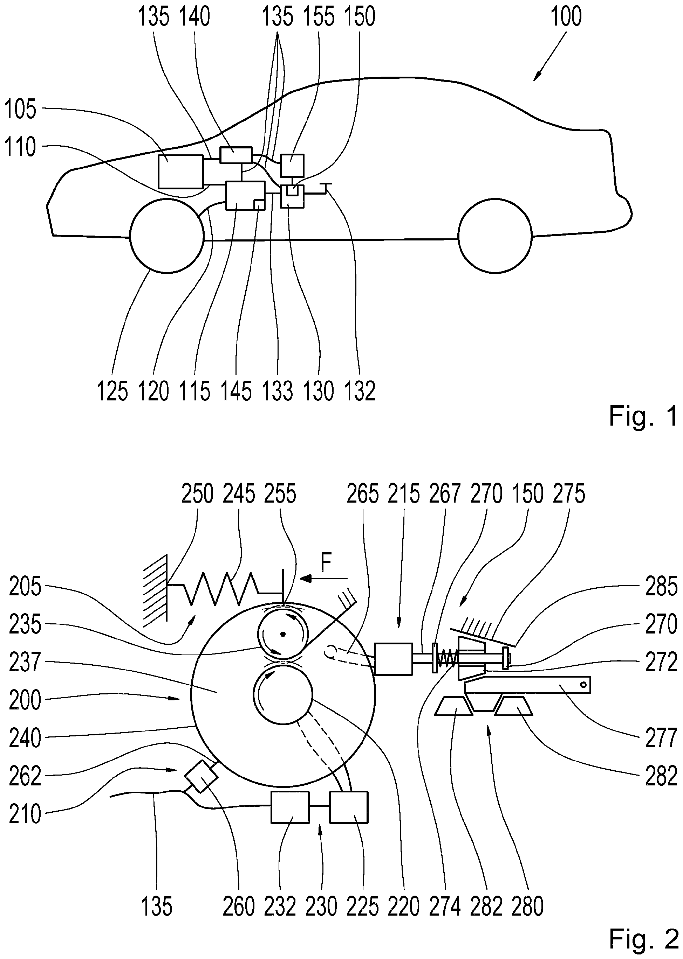

Figur 1 zeigt eine schematische Darstellung eines Fahrzeugs 100. Das Fahrzeug 100 wird von einem Antriebsmotor 105 angetrieben, welcher beispielsweise über einen Antriebsstrang 110 Kraft oder ein Drehmoment in ein Getriebe 115 einleitet, wobei das Getriebe 115 mittels einer Welle 120 Räder 125 des Fahrzeugs 100 antreibt, um das Fahrzeug 100 fortzubewegen. In herkömmlichen Fahrzeugen 100 ist der Antriebsmotor 105 meist als Verbrennungskraftmaschine ausgestaltet, wobei das Getriebe 115 als Schaltgetriebe oder als Automatikgetriebe ausgestaltet ist. Für den Fall, dass das Getriebe 115 als Automatikgetriebe ausgestaltet ist, ist meist eine Steuereinheit 130 in der Form eines Schalters vorgesehen, über welche beispielsweise ein in der Figur 1 nicht dargestellter Fahrzeuginsasse mittels eines Schalthebels 132 den Betriebsmodus des Getriebes 115, beispielsweise einen Parkmodus (auch als Parksperre bezeichnet), einen Rückwärts-Fahrmodus oder einen Vorgehens-Fahrmodus einstellen kann. Der eingestellte Betriebsmodus kann dann über einen mechanischen und/oder elektrischen Steuerstrang 133 in dem Getriebe 115 eingestellt werden, welches dann entsprechend dem eingestellten Betriebsmodus betrieben wird.

Zur Implementierung von Funktionen des Antriebsmotors 105, des Getriebes 115 und/oder der Steuereinheit 130 wird oftmals auf elektronische Betriebsmittel wie beispielsweise Elektromagnete, Schalter oder Elektromotoren zurückgegriffen, wobei elektrische Energie aus einem Bordnetz 135 des Fahrzeugs 100 zum Betrieb dieser Betriebsmittel bezogen wird. Das Bordnetz 135 wird dabei mit elektrischer Energie aus einem Energiespeicher 140 gespeist, wobei dieser Energiespeicher 140 beispielsweise eine Batterie oder ein Akkumulator sein kann.

Tritt nun ein Defekt im Bordnetz 135 oder im Energiespeicher 140 auf, kann im ungünstigsten Fall eine Spannung im Bordnetz 135 zusammenbrechen, sodass vom Bordnetz 135 gespeiste elektronische Betriebsmittel ihre Funktion verlieren. Um dennoch einen sicheren Betriebszustand des Fahrzeugs 100 zu erreichen, insbesondere wenn das Fahrzeug 100 abgestellt ist und gegen ein Wegfahren zu sichern ist, sollte auch bei einer zusammengebrochenen, d. h. fehlender Spannung im Bordnetz 135 das Einlegen der Parksperre, also die Aktivierung einer Parksperreinheit 145 als Teil des Getriebes 115 als Sicherheitsfunktion sichergestellt sein. Besondere Relevanz gewinnt die Implementierung einer solchen Aktivierung der Parksperreinheit 145 als Sicherheitsfunktionen dann, wenn es sich bei dem Fahrzeug 100 um ein Elektrofahrzeug handelt, bei dem aus dem Energiespeicher 140 auch die Antriebsenergie für den Antriebsmotor 105 bereitgestellt wird. In einem solchen Elektrofahrzeug würde ein Defekt im Bordnetz 135 oder im Energiespeicher 140 anderenfalls dazu führen, dass das Fahrzeug 100 auch im Stillstand nicht mehr in einem sicheren ruhenden Betriebszustand gehalten werden könnte.

Um nun sicherzustellen, dass auch bei einem Abfall der Versorgungsspannung im Bordnetz 135 die Parksperreinheit 145 aktiviert wird, kann gemäß einem Ausführungsbeispiel des hier vorgeschlagenen Ansatzes ein Parksperrgetriebe 150 als Teil der Steuereinheit 130 vorgesehen sein, dassauch beim Abfall der Versorgungsspannung im Bordnetz 135 das zuverlässige und sichere Einlegen der Parksperr-Funktion, also die Aktivierung der Parksperreinheit 145 (was auch als Sperrzustand bezeichnet werden kann) möglich wird. Der detailliertere Aufbau des Parksperrgetriebes 150 wird dabei in der folgenden Beschreibung noch näher erläutert. Um die volle Funktionalität des Parksperrgetriebes 150 nutzen zu können, wird das Parksperrgetriebe 150 von einer Parksperrgetriebesteuereinheit 155 angesteuert, was noch bei vorhandener Bordnetzspannung des Bordnetzes 135 erfolgt und zur Vorbereitung und zum Erhalt der Sicherungsfunktionalität des Parksperrgetriebes 150 zum Einlegen der Parksperre bzw. Aktivieren der Parksperreinheit 145 dient. Die Funktion der Parksperrgetriebesteuereinheit 155 wird in der nachfolgenden Beschreibung ebenfalls noch detaillierter erläutert.

Figur 2 zeigt eine schematische Darstellung eines Parksperrgetriebes 150 gemäß einem Ausführungsbeispiel des hier vorgestellten Ansatzes. Das Parksperrgetriebe 150 umfasst ein Planetengetriebe 200, eine Federeinheit 205, eine Hohlradfixierungs-einheit 210 sowie eine Arretierungseinheit 215.

Das Planetengetriebe 200 weist dabei ein zentrales, antreibbares Sonnenrad 220 auf, welches beispielsweise durch ein Schneckengetriebe 225 einer beispielsweise vom Bordnetz 135 gespeisten Antriebseinheit 230, insbesondere durch einen Elektromotor 232, angetrieben werden kann. Ferner umfasst das Planetengetriebe 200 zumindest ein in der Figur 2 schematisch dargestelltes Planetenrad 235, welches einerseits als Zahnrad mit dem als Zahnrad ausgestalteten Sonnenrad 220 kämmt und andererseits mit einem das Planetenrad 235 und das Sonnenrad 220 umgebenden Hohlrad 240 kämmt, welches ebenfalls als Zahnrad, hier jedoch nach innen gerichteten Zähnen ausgestaltet ist. Das Planetenrad 235 ist dabei auf einem drehbar gelagerten Planetenträger 237 angeordnet, der beispielsweise als Scheibe mit entsprechenden Vorsprüngen oder Zapfen zur Aufnahme des oder der Planetenräder 235 ausgestaltet ist. Denkbar ist jedoch auch, dass mehrere zum Planetenrad 235 analoge Planetenräder an dem Planetenträger 237 befestigt sind.

Die Federeinheit 205 weist eine Feder 245 wie beispielsweise eine Schraubenfeder oder eine beliebige andere metallische Feder auf, die einerseits an einem Fixpunkt 250, beispielsweise einer Gehäusewand des Parksperrgetriebes 150 und andererseits an einem Anschlagpunkt 255 am Hohlrad 240 fixiert ist. Bei einer Drehung des Hohlrads 240 wird somit die Feder 245 der Federeinheit 205 gestreckt oder gestaucht und somit gespannt.

Die Hohlradfixierungseinheit 210 weist beispielsweise einen vom Bordnetz 135 gespeisten Elektromagneten 260 auf, der ausgebildet ist, um in einem ersten Betriebszustand einen Stift 262 auszufahren, sodass der Stift 262 beispielsweise mit einem Vorsprung oder Zahn des Hohlrads 240 Eingriff nimmt und somit das Hohlrad 240 gegen eine Drehung fixiert. Wird die Bestromung des Elektromagneten 260 abgeschaltet, was beispielsweise durch einen entsprechenden Schaltbefehl oder beim Abfall der Versorgungsspannung des Bordnetzes 135 erfolgen kann, wird der Stift 262 (der auch als Vorsprung bezeichnet werden kann), beispielsweise durch Federkraft, zurückgezogen, sodass eine Drehung des Hohlrads 240 wieder freigegeben wird.

Weiterhin umfasst das Parksperrgetriebe 150 die mit dem Planetenträger 237 gekoppelte Arretierungseinheit 215. Die Arretierungseinheit 215 umfasst beispielsweise ein Stangengetriebe 265 mit exzentrisch ausgestalteter Verbindung zum Planetenträger 237 oder beispielsweise ein (in der Figur 2 nicht dargestelltes) Schneckengetriebe, welches mit einem Stößel 267 gekoppelt ist, sodass die Arretierungseinheit 215 ausgebildet ist, um eine Drehung des Planetenträgers 237 in eine lineare Bewegung des Stößels 267 zu überführen. An dem Stößel 267 ist zwischen zwei Begrenzungselementen 270 ferner ein Konuselement 272 angebracht, welches über eine Feder 274 beweglich gelagert ist. Wird nun das Konuselement 272 in der Figur 2 nach rechts bewegt, kann es an einer Haltewand 275, die beispielsweise durch eine Gehäusewand des Parksperrgetriebes 150 gebildet ist, entlang gleiten und hierdurch auf einer der Haltewand 275 gegenüberliegenden Seite einen Parksperrschalter 277, der beispielsweise als Teil der Steuereinheit 130 das Einlegen der Parksperre, d. h., das Aktivieren der Parksperreinheit 145 steuert, in eine Sicherungsposition 280 zwischen zwei Haltenasen 282 drücken. Wird nun der Stößel 267 in der Figur 2 nach links bewegt, nimmt der das Konuselement 272 mit und gibt somit den Parksperrschalter 277 frei, sodass er beispielsweise durch eine in der Figur 2 nicht dargestellten Feder aus der Sicherungsposition 280 verbracht wird und somit die Parksperre auslegt bzw. die Parksperreinheit 145 deaktiviert (was auch als Freigabezustand bezeichnet werden kann). Alternativ oder zusätzlich kann auch ein Anschlagelement 285 vorgesehen sein, welches eine lineare Bewegung des Stößels 267 auf einer dem Planetengetriebe 200 gegenüberliegenden Seite begrenzt. Dieses Anschlagelement 285 kann beispielsweise ebenfalls durch eine Gehäusewand des Parksperrgetriebes 150 gebildet sein und/oder einstückig mit der Haltewand 275 gebildet sein.

Nachfolgend wird die Funktionsweise des in der Figur 2 beschriebenen Parksperrgetriebes 150 näher erläutert.

Wird die Ansteuereinheit 230 des Parksperrgetriebes 150 eingeschaltet, beispielsweise durch ein Steuersignal der in der Figur 1 dargestellten Parksperrgetriebesteuereinheit 155, bezieht ein Elektromotor 232 der Ansteuereinheit 230 aus dem Bordnetz 135 elektrische Energie und bewegt unter Vermittlung des Schneckengetriebes 225 das Sonnenrad 220 im Uhrzeigersinn, wie es in der Figur 2 durch den im Sonnenrad 220 eingezeichneten Pfeil dargestellt ist. Hierdurch wird das mit dem Sonnenrad 220 kämmende Planetenrad 235 entsprechend den in der Figur 2 dargestellten Pfeilen gedreht und überträgt diese Drehbewegung auf das Hohlrad 240. Nachdem das Hohlrad 240 über die Federeinheit 205 mit dem Fixpunkt 250 gekoppelt ist, wird das von der Federeinheit 205 die Bewegung des Hohlrads 240 gehemmt, sodass durch die Drehung des Planetenrades 235 ein Drehmoment auf den Planetenträger 237 ausgeübt wird, dass durch die Arretierungseinheit 215 in eine lineare Bewegung des Stößels 267 nach rechts überführt wird. Stößt der Stößel 267 am Anschlagelement 285 an wird eine weitere Bewegung des Stößels 267 nach rechts verhindert, sodass nun der Planetenträger 237 in seiner Drehbewegung fixiert ist. Bei einer weiteren Drehung des Sonnenrades 220 in die in der Figur 2 dargestellten Drehrichtung wird nun, bei fixiertem Planetenträger 237, unter Vermittlung des Planetenrads 235 entgegen der von der Federeinheit 205 auf das Hohlrad 240 ausgeübten Kraft das Hohlrad 240 entgegen dem Uhrzeigersinn gedreht, sodass auf die Federeinheit 205 eine in der Figur 2 dargestellte Federkraft F wirkt, die die Federeinheit 205 durch eine Drehung des Hohlrad 240 spannt. Ist nun die Federeinheit 205 gespannt, wird beispielsweise ebenfalls ein entsprechendes Steuersignal der Parksperrgetriebesteuereinheit 155 aus Figur 1 an die Hohlradfixierungseinheit 210 übersandt, um diese in den ersten Betriebszustand zu bringen. In diesem ersten Betriebszustand wird beispielsweise der entsprechende Elektromagnet 260 eingeschaltet und den Stift 262 fährt aus, um die aktuelle Position des Hohlrads 240 zu fixieren und somit die Federeinheit 205 unter Spannung zu halten.

Wie aus der Darstellung in Figur 2 ersichtlich ist, ist in diesem ersten Betriebszustand der Hohlradfixierungseinheit 210 der Parksperrschalter 277 in der Sicherungsposition 280, sodass die Parksperre eingelegt ist, das heißt die Parksperreinheit 145 aktiviert ist. Wird nun die Antriebseinheit 230 umgeschaltet, beispielsweise durch ein weiteres Steuersignal der in der Figur 1 dargestellten Parksperrgetriebesteuereinheit 155, sodass das Sonnenrad 220 sich entgegen dem Uhrzeigersinn dreht, lässt sich durch die Fixierung des Hohlrads 240 eine Drehung des Planetenträgers 237 entgegen dem Uhrzeigersinn erreichen.

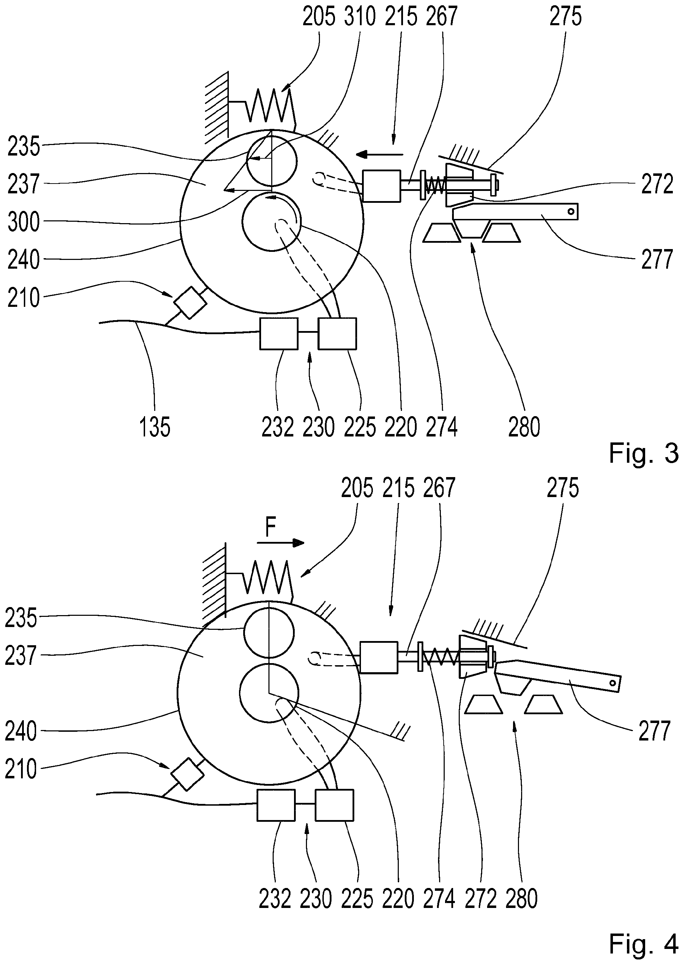

Figur 3 zeigt eine schematische Darstellung des Parksperrgetriebes 150 gemäß einem Ausführungsbeispiel des hier vorgestellten Ansatzes im ersten Betriebszustand der Hohlradfixierungseinheit 210. In der Darstellung der Figur 3 sind dabei aus Gründen der besseren Übersichtlichkeit einige der in der Figur 2 ebenfalls dargestellten Komponenten nicht mehr explizit eingezeichnet oder bezeichnet, obwohl diese im realen Parksperrgetriebe 150 dennoch vorhanden sind. Wird also das Sonnenrad 220, wie im vorangegangenen Absatz beschrieben, entgegen dem Uhrzeigersinn gedreht, beispielsweise mit der Geschwindigkeit 300, die in der Figur 3 durch einen entsprechenden Pfeil am Umfangsrand des Sonnenrades 220 dargestellt ist, wird bei fixiertem Hohlrad 240 unter Vermittlung des Planetenrads 235 der Planetenträger 237 mit einer Geschwindigkeit 310 entgegen dem Uhrzeigersinn bewegt, wie es in dem Geschwindigkeitsdiagramm im Bereich des Planetenrads 235 in Figur 3 dargestellt ist. Hierdurch wird der Stößel 267 der Arretierungseinheit 215 nach links gezogen, wodurch der Parksperrschalter 277 freigegeben wird und hierdurch die Parksperre ausgelegt bzw. die Parksperreinheit 145 deaktiviert wird.

Analog kann auch das Wiedereinlegen der Parksperre bzw. die Reaktivierung der Parksperreinheit 145 im ersten Betriebszustand der Hohlradfixierungseinheit 210, d. h. bei fixiertem Hohlrad 240 des Parksperrgetriebes 150 erfolgen, wenn die Antriebseinheit 230 wieder so angesteuert wird, dass unter Vermittlung des Schneckengetriebes 225 das Sonnenrad 220 im Uhrzeigersinn gedreht wird, wie es bereits in der Figur 2 dargestellt ist. Auf diese Weise würde bei fixiertem Hohlrad 240 der Planetenträger 237 unter Vermittlung des Planetenrads 235 nun im Uhrzeigersinn gedreht, wodurch der Stößel 267 wieder nach links bewegt wird und das Konuselement 272 in Verbindung mit der Haltewand 275 den Parksperrschalter 277 wieder in die Sicherungsposition 280 drückt.

Im ersten Betriebszustand der Hohlradfixierungseinheit 210, d. h. bei fixiertem Hohlrad 240, kann nun das Ein- und Auslegen der Parksperre beliebig oft nacheinander wiederholt werden. Hierzu ist lediglich eine entsprechende Ansteuerung der Antriebseinheit 230 erforderlich, um das Sonnenrad 220 im Uhrzeigersinn oder gegen den Uhrzeigersinn zu drehen und hierdurch eine Drehung des Planetenträgers 237 zu bewirken.

Figur 4 zeigt eine weitere schematische Darstellung eines Parksperrgetriebes 150 gemäß einem Ausführungsbeispiel des hier vorgestellten Ansatzes im ersten Betriebszustand der Hohlradfixierungseinheit 210. Ist die Parksperre offen, d. h. die Parksperre ausgelegt oder die Parksperreinheit 145 deaktiviert und der Elektromotor 232 der Antriebseinheit 230 nicht bestromt, wird das Sonnenrad 220 durch die Hemmung des Schneckengetriebes 225 praktisch fixiert. In diesem Fall wird der Stößel 267 der Arretierungseinheit 215 möglichst weit links gehalten, um den Parksperrschalter 277 aus der Sicherungsposition 280 freizugeben oder frei zu halten.

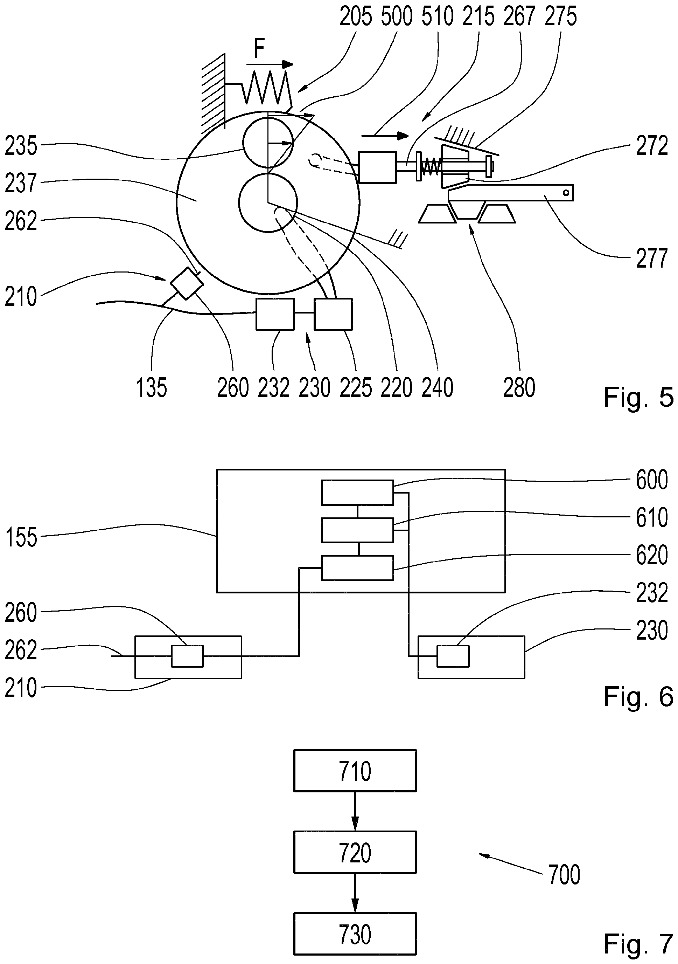

Figur 5 zeigt eine andere schematische Darstellung des Parksperrgetriebes 150 gemäß einem Ausführungsbeispiel des hier vorgestellten Ansatzes. Hierbei ist in der Figur 5 das Parksperrgetriebe 150 in einem Zustand dargestellt, in dem die Versorgungsspannung Bordnetz 135 zusammengebrochen ist. In diesem Fall wird der Elektromagnet 260 der Hohlradfixierungseinheit 210 nicht mehr mit elektrischer Energie versorgt, sodass der Stift 262, beispielsweise durch eine Federkraft einer der Figur 5 nicht dargestellten Feder zurückgezogen wird und somit eine Drehung des Hohlrads 240 freigegeben wird. Die Hohlradfixierungseinheit 210 wird somit in den zweiten Betriebszustand gebracht. Das Sonnenrad 220 wird nun durch die Hemmung des Schneckengetriebes 225 nahezu blockiert, insbesondere wenn der Elektromotor 232 nicht mehr mit elektrischer Energie versorgt wird und ein zusätzliches Trägheitsmoment darstellt. In diesem Fall wird nun durch die gespannte Federeinheit 205 eine Kraft F bzw. ein Drehmoment auf das nun freigegebene Hohlrad 240 ausgeübt. Hierdurch wird beispielsweise ein Innenzahn des freigegebenen Hohlrads 240 mit der in der Figur 5 dargestellten Geschwindigkeit 500 bewegt. Dies wiederum verursacht eine Bewegung des Planetenträgers 237 bei nahezu fixiertem Sonnenrad 240, wodurch der Stößel 267 der Arretierungseinheit 215 in bekannter Weise entsprechend dem Pfeil 510 nach rechts geschoben wird, wodurch wiederum der Parksperrschalter 277 unter Vermittlung des Konuselements 272 sowie der Haltewand 275 wieder die Sicherungsposition 280 gedrückt wird. Auf diese Weise lässt sich eine Notfall-Sicherungsfunktion realisieren, die sicherstellt, dass auch bei einem Ausfall des Bordnetzes zuverlässig und sicher die Parksperreinheit 145 aktiviert und somit die Parksperre eingelegt wird.

Mit anderen Worten ausgedrückt, werden in den Ausführungsbeispielen des hier vorgeschlagenen Ansatzes die Funktionen "Spannen Rückfalllösung" und Auslegen Parksperre in Reihe geschaltet. In dem hier vorgestellten Ansatz wird zur Untersetzung der Motordrehzahl unter anderem ein Planetengetriebe 200 (Umlaufgetriebe) und eine Schneckenstufe verwendet. Durch geschickte Ausnutzung der beispielsweise 3 Gänge des Planetengetriebes 200 wird die Reihenschaltung der Funktionen realisiert. Hierbei sind folgende Sequenzen möglich:
- Spannen Rückfallmechanismus, wie dies mit Bezugnahme auf die Fig. 2 näher beschrieben ist
- Sichern Rückfallmechanismus durch ein Fixieren des Hohlrades mittels eines Verbringen der Hohlradfixierungseinheit in den ersten Betriebszustand
- Auslegen Parksperre
- Einlegen Parksperre
- Parksperre offen
- Rückfallverriegelung

Hierbei ist insbesondere das Spannen des Rückfallmechanismus besonders vorteilhaft, da hierdurch die Sicherung des Einschaltens der Parksperre im Notfall wie einem Abfall der Bordnetzspannung möglich wird. Es wird somit im Zustand "Parksperre eingelegt" der Motor 230 in die Richtung gedreht, wie wenn die Parksperre weiter einlegt werden sollte. Dadurch wird der Planetenträger 237 fixiert und die Motordrehung des Motors 232 der Antriebseinheit 230 wird an das Hohlrad 240 übertragen. Am Hohlrad 240 befindet sich die "Rückfallfeder" 245 in der Federeinheit 205. Diese wird nun gespannt. Ist die Feder 245 gespannt, wird das Hohlrad 240 mit einem Elektromagneten 260 der Hohlradfixierungseinheit 210 arretiert.

Es können nun ein Auslegen der Parksperre und ein Einlegen der Parksperre in beliebiger Anzahl erfolgen. Hierbei kann Parksperre kann nun über den Elektromotor 232 der Antriebseinheit 230 ein- und ausgelegt werden, wie dies mit Bezug auf die Figuren 2 bis 4 näher dargestellt ist.

Bricht die Versorgungsspannung im Bordnetz 135 zusammen, wird der Elektromagnet 260 der Hohlradfixierungseinheit 210 entstromt und er gibt das Hohlrad 240 frei. Durch die Auslegung des Schneckenrades des Schneckengetriebes 225 als Getriebestufe mit Selbsthemmung, wird das Sonnenrad 220 arretiert und der Leistungsabtrieb erfolgt über den Planetenträger 237.

Figur 6 zeigt ein Blockschaltbild der Parksperrgetriebesteuereinheit 155 gemäß einem Ausführungsbeispiel des hier vorgestellten Ansatzes im Zusammenwirken mit der Hohlradfixierungseinheit 210 sowie der Antriebseinheit 230, insbesondere dem Elektromotor 232. Die Parksperrgetriebesteuereinheit 155 umfasst dabei eine Einheit 600 zum Sperren einer Drehung des Planetenträgers, eine Einheit 610 zum Spannen der Federeinheit sowie eine Einheit 620 zum Umschalten der Hohlradfixierungseinheit 210 in den ersten Betriebszustand. Die Einheit 600 zum Sperren kann hierbei ausgebildet sein, um den Elektromotor 232 der Antriebseinheit 230 derart anzusteuern, dass das Sonnenrad 220 entsprechend der Darstellung aus der Figur 2 im Uhrzeigersinn gedreht wird und über die Vermittlung des Planetenrads 235 eine Drehung des Planetenträgers 237 in eine Position ausgelöst wird, bei der der Stößel 267 am Anschlagelement 285 anliegt. In diesem Fall wird eine weitere Bewegung des Stößels 267 gesperrt, wodurch auch eine weitere Drehung des Planetenträgers 237 gesperrt wird. Das Anlegen des Stößels 267 am Anschlagelement 285 kann hierbei beispielsweise durch die zensieren eine Stromaufnahme des Elektromotors 232 erfolgen, wobei diese Stromaufnahme des Elektromotors 232 bei fixiertem Planetenträger 237 ansteigen wird, da Energie zum Spannen der Feder 245 bzw. der Federeinheit 205 erforderlich ist. Die Einheit 610 zum Spannen der Federeinheit 205 kann dabei ebenfalls ausgebildet sein, den Elektromotor 232 mit, nun erhöhter, elektrischer Leistung oder Energie zu versorgen, um bei gleicher Drehrichtung des Sonnenrads 220 wie zum Verbringen des Planetenträgers 237 in den fixierten Zustand eine Drehung des Hohlrads 240 entsprechend der Darstellung aus Figur 2 entgegen dem Uhrzeigersinn zu drehen, um die Federeinheit 205 zu spannen. Die Einheit 620 zum Umschalten kann ausgebildet sein, um nach dem Erreichen des gespannten Zustandes der Federeinheit 205 den Elektromagneten 260 der Hohlradfixierungseinheit 210 mit Strom zu versorgen, um die Hohlradfixierungseinheit 210 in den ersten Betriebszustand zu bringen, d. h., den Stift 262 auszufahren und hierdurch das Hohlrad 240 gegen eine Drehung zu fixieren. Das Erreichen des gespannten Zustandes der Federeinheit 205 kann hierbei darum durch eine Erfassung der Stromaufnahme des Elektromotors 232 der Antriebseinheit 230 erfolgen, wobei der gespannten Zustand der Federeinheit 205 beispielsweise dann als erreicht betrachtet werden kann, wenn die Stromaufnahme des Elektromotors 232 einen Schwellwert überschritten hat.

Figur 7 zeigt ein Ablaufdiagramm eines Ausführungsbeispiels des hier vorgestellten Ansatzes als Verfahren 700 zum Betreiben einer Variante eines hier vorgestellten Parksperrgetriebes 150. Das Verfahren 700 weist einen Schritt 710 des Sperrens einer Drehung des Planetenträgers, einen Schritt 720 des Spannens der Federeinheit und einen Schritt 730 des Umschalten der Hohlradfixierungseinheit in den ersten Betriebszustand auf.

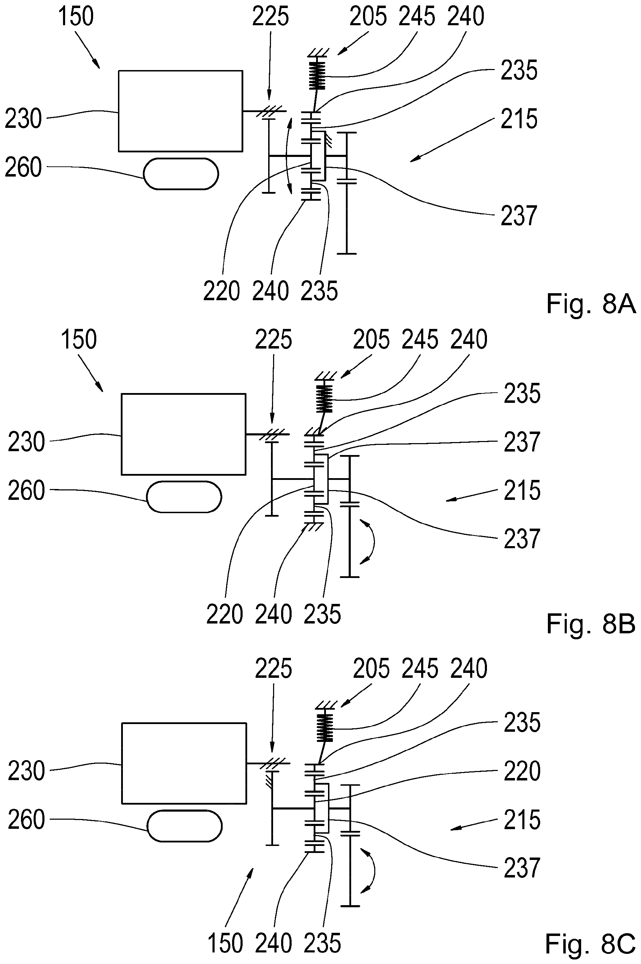

Die Figuren 8A bis 8C zeigen schematische Darstellungen von Schaltplänen eines Pakrsperrgetriebes 150 gemäß einem Ausführungsbeispiel des hier vorgestellten Ansatzes in unterschiedlichen Betriebsmodi. Es werden zur besseren Übersichtlichkeit in den Figuren 8A bis 8C wiederum einzelne Komponenten oder Elemente weggelassen, die für den jeweils beschriebenen Zusammenhang nicht von zentraler Bedeutung sind. Bei dem in der Figur 8A dargestellten Schaltplan ist ein Zustand wiedergegeben, bei dem die Feder 245 der Federeinheit gespannt wird. Bei einem gesperrten Planetenträger 237 wird der Elektromotor 232 der Antriebseinheit 230 bestromt, wodurch unter Vermittlung des Schneckengetriebes 225 das Sonnenrad 220 gedreht wird. Unter Vermittlung des Planetenrades 235 sowie des Hohlrades 240 wird dann die Feder 245 gespannt. Durch Aktivierung d. h. eine Bestromung des Elektromagneten 260 der Hohlradfixierungseinheit 210 wird dann das Hohlrad 240 gegen eine Drehung fixiert, wie es in dem schematischen Schaltplan aus Figur 8B dargestellt ist. In diesem Fall, in dem die Hohlradfixierungseinheit 210 im ersten Betriebszustand ist, kann durch den Elektromotor 232 die Parksperre ein- oder ausgelegt werden, je nachdem in welche Richtung das Sonnenrad 220 gedreht wird. Dieses Ein- oder Auslegen kann durch eine Rotation eines Elementes der Arretierungseinheit 215 erfolgen. Fällt nun die Versorgungsspannung am Bordnetz ab bzw. ganz aus, ist es unter Verwendung des Hier vorgestellten Pakrsperrgetriebes möglich, die Parksperre notzuverrriegeln. Dies kann beispielsweise entsprechend dem in der Figur 8C dargestellten Schaltplan durch eine Entstromung des Elektromagneten 260 der Hohlradarretierungseinheit 210 erfolgen, sodass das Hohlrad 240 wieder gegen eine Drehung freigegeben wird und durch Einwirkung der Kraft der Feder 245 die Arretierungseinheit 215 in einen Zustand zu bringen, in dem die Parksperreinheit des Fahrzeugs aktiviert ist, d. h., die Parksperre eingelegt ist.

Die beschriebenen und in den Figuren gezeigten Ausführungsbeispiele sind nur beispielhaft gewählt.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 105: Antriebsmotor
- 110: Antriebsstrang
- 115: Getriebe
- 120: Welle
- 125: Rad
- 130: Steuereinheit
- 132: Schalthebel
- 135: Bordnetz
- 140: Energiespeicher
- 145: Parksperreinheit
- 150: Parksperrgetriebe
- 155: Parksperrgetriebesteuereinheit

- 200: Planetengetriebe
- 205: Federeinheit
- 210: Hohlradfixierungseinheit
- 215: Arretierungseinheit
- 220: Sonnenrad
- 225: Scheckengetriebe
- 230: Antriebseinheit
- 232: Elektromotor
- 235: Planetenrad
- 237: Planetenträger
- 240: Hohlrad
- 245: Feder
- 250: Anschlagpunkt
- 255: Fixpunkt
- F: Kraft
- 260: Elektromagnet
- 262: Stift
- 265: Stangengetriebe
- 267: Stößel
- 270: Anschlagelement
- 272: Konuselement
- 274: Feder
- 275: Haltewand
- 277: Parksperrschalter
- 280: Sicherungsposition
- 282: Haltenasen
- 285: Anschlagelement

- 300: Geschwindigkeit des Umfangsrandes des Sonnenrads
- 310: Geschwindigkeit des Planetenrads

- 500: Geschwindigkeit eines Innenzahns des Hohlrads
- 510: Richtung des rückgezogenen Stößels

- 600: Einheit zum Sperren
- 610: Einheit zum Spannen
- 620: Einheit zum Umschalten

- 700: Verfahren zum Betreiben eines Parksperrgetriebes
- 710: Schritt des Sperrens
- 720: Schritt des Spannens
- 730: Schritt des Umschaltens

## Patentansprüche

1. Parksperrgetriebe (150) zum Betreiben einer Parksperreinheit (145) eines Fahrzeugs, wobei das Parksperrgetriebe (150) die folgenden Merkmale aufweist:
ein Planetengetriebe (200), das ein Sonnenrad (220), ein Hohlrad (240) und zumindest ein mit dem Sonnenrad (220) und dem Hohlrad (240) kämmendes Planetenrad (235) aufweist, wobei das zumindest eine Planetenrad (235) an einem drehbar gelagerten Planetenträger (237) befestigt ist;
eine Federeinheit (205), die mit dem Hohlrad (240) gekoppelt ist, wobei die Federeinheit (205) ausgebildet ist, um durch eine Drehung des Hohlrades (240) gespannt zu werden und im gespannten Zustand ein Drehmoment und/oder eine Kraft auf das Hohlrad (240) auszuüben;
eine Hohlradfixierungseinheit (210), die ausgebildet ist, um in einem ersten Betriebszustand das Hohlrad (240) gegen eine Drehung zu fixieren und in einem zweiten Betriebszustand eine Drehung des Hohlrades (240) freizugeben; und
eine mit dem Planetenträger (237) gekoppelte Arretierungseinheit (215), die ausgebildet ist, um bei einer Drehung des Planetenträgers (237) die Parksperreinheit (145) des Fahrzeugs (100) zwischen einem Sperrzustand und einem Freigabezustand umzuschalten;
**dadurch gekennzeichnet, dass**
die Arretierungseinheit (215) ein Stangengetriebe (265) mit exzentrisch ausgestalteter Verbindung zum Planetenträger (237) umfasst, welches mit einem Stößel (267) gekoppelt ist, sodass die Arretierungseinheit (215) ausgebildet ist, um eine Drehung des Planetenträgers (237) in eine lineare Bewegung des Stößels (267) zu wandeln;
und dass die Federeinheit (205) eine Feder (245) aufweist, die einerseits an einem Fixpunkt (250) und andererseits an einem Anschlagspunkt (255) am Hohlrad (240) fixiert ist.

2. Parksperrgetriebe (150) gemäß Anspruch 1, **dadurch gekennzeichnet, dass** die Hohlradfixierungseinheit (210) einen elektrischen Aktuator (260) aufweist, der ausgebildet ist, um die Hohlradfixierungseinheit (210) im strom- und/oder spannungslosen Zustand in den zweiten Betriebszustand zu bringen.

3. Parksperrgetriebe (150) gemäß Anspruch 2, **dadurch gekennzeichnet, dass** der elektrische Aktuator (260) ein Elektromagnet ist und/oder einen in einen Zahnabschnitt des Hohlrades (240) eingreifenden Vorsprung (262) aufweist.

4. Parksperrgetriebe (150) gemäß Anspruch 3, **dadurch gekennzeichnet, dass** die Arretierungseinheit (215) ein Anschlagelement (285) aufweist, das ausgebildet ist, um einen Bewegungsweg des Stößels (267) zu begrenzen, wobei die Arretierungseinheit (215) ferner ausgebildet ist, um bei einem Anliegen des Stößels (267) an dem Anschlagelement den Planetenträger (237) gegen eine Drehung zu fixieren.

5. Parksperrgetriebe (150) gemäß Anspruch 1 oder 4, **dadurch gekennzeichnet, dass** der Stößel (267) ausgebildet ist, um bei einer Bewegung in den Sperrzustand der Parksperreinheit (145) einen Parksperrschalter (277) in eine Sicherungsposition (280) an zumindest einer Haltenase (282) zu drücken und bei einer Bewegung in den Freigabezustand eine Bewegung des Parksperrschalters (277) aus der Sicherungsposition (280) heraus freizugeben.

6. Parksperrgetriebe (150) gemäß Anspruch 5, **dadurch gekennzeichnet, dass** der Stößel (267) ein Konuselement (272) aufweist, das ausgebildet oder angeordnet ist, um sich an einer Haltewand (275) abzustützen, um den Parksperrschalter(277) in die Sicherungsposition (280) zu drücken.

7. Parksperrgetriebe (150) gemäß einem der vorangegangenen Ansprüche, **dadurch gekennzeichnet, dass** die Arretierungseinheit (215) ein Schneckengetriebe aufweist.

8. Parksperrgetriebe (150) gemäß einem der vorangegangenen Ansprüche, **gekennzeichnet, durch** eine mit dem Sonnenrad (220) gekoppelte Antriebseinheit (230), insbesondere wobei die Antriebseinheit (230) einen Elektromotor (232) umfasst und/oder mit dem Sonnenrad (220) verbunden ist und/oder wobei die Antriebseinheit (230) im strom- oder spannungslosen Zustand eine Drehung des Sonnenrades (220) sperrt.

9. Parksperrgetriebe (150) gemäß Anspruch 8, **dadurch gekennzeichnet, dass** die Antriebseinheit (230) ein Schneckengetriebe (225) zur Übertragung einer Drehbewegung auf das Sonnenrad (220) aufweist.

10. Parksperrgetriebe (150) gemäß einem der vorangegangenen Ansprüche, **dadurch gekennzeichnet, dass** die Feder (245) eine Schraubenfeder (245) oder eine metallische Feder ist.

11. Verfahren (700) zum Betreiben eines Parksperrgetriebes (150) gemäß einem der vorangegangenen Ansprüche, wobei das Verfahren die folgenden Schritte aufweist:
Sperren (710) einer Drehung des Planetenträgers (237);
Spannen (720) der Federeinheit (205); und
Umschalten (730) der Hohlradfixierungseinheit (210) in den ersten Betriebszustand.

12. Computerprogrammprodukt mit Programmcode zur Durchführung und/oder Ansteuerung der Schritte des Verfahrens (700) gemäß Anspruch 11, wenn das Computerprogrammprodukt auf einer Parksperrgetriebesteuereinheit (155) ausgeführt wird.

13. Maschinenlesbares Speichermedium, auf dem das Computerprogrammprodukt nach Anspruch 12 gespeichert ist.

14. Parksperrgetriebesteuereinheit (155), die eingerichtet ist, um die Schritte des Verfahrens (700) gemäß Anspruch 11 in entsprechenden Einheiten (600, 610, 620) auszuführen und/oder anzusteuern.

## Claims

1. Parking lock gear mechanism (150) for operating a parking lock unit (145) of a vehicle, wherein the parking lock gear mechanism (150) has the following features:
a planetary gear mechanism (200) which has a sun gear (220), a ring gear (240) and at least one planetary gear (235) which meshes with the sun gear (220) and the ring gear (240), wherein the at least one planetary gear (235) is attached to a rotatably mounted planetary carrier (237);
a spring unit (205) which is coupled to the ring gear (240), wherein the spring unit (205) is designed to be tensioned by rotation of the ring gear (240), and in the tensioned state to apply a torque and/or a force to the ring gear (240);
a ring-gear-securing unit (210) which is designed to secure the ring gear (240) against rotation in a first operating state, and to release rotation of the ring gear (240) in a second operating state; and
a securing unit (215) which is coupled to the planetary carrier (237) and is designed to switch over the parking lock unit (145) of the vehicle (100) between a locked state and a release state when the planetary carrier (237) rotates;
**characterized in that**
the securing unit (215) comprises a rod mechanism (265) with an eccentrically configured connection to the planetary carrier (237), which rod mechanism (265) is coupled to a tappet (267), so that the securing unit (215) is designed to convert a rotation of the planetary carrier (237) into a linear movement of the tappet (267);
and **in that** the spring unit (205) has a spring (245) which is secured at one end to a fixed point (250) and at the other end to a stop point (255) on the ring gear (240) .

2. Parking lock gear mechanism (150) according to Claim 1, **characterized in that** the ring-gear-securing unit (210) has an electrical actuator (260) which is designed to change the ring-gear-securing unit (210) in the currentless and/or voltageless state into the second operating state.

3. Parking lock gear mechanism (150) according to Claim 2, **characterized in that** the electrical actuator (260) is an electromagnet and/or has a projection (262) which engages in a tooth section of the ring gear (240).

4. Parking lock gear mechanism (150) according to Claim 3, **characterized in that** the securing unit (215) has a stop element (285) which is designed to limit movement travel of the tappet (267), wherein the securing unit (215) is also designed to secure the planetary carrier (237) against rotation when the tappet (267) bears against the stop element.

5. Parking lock gear mechanism (150) according to Claim 1 or 4, **characterized in that** the tappet (267) is designed to press a parking lock switch (277) into a locked position (280) on at least one securing protrusion (282) in the case of movement into the locked state of the parking lock unit (145), and to release a movement of the parking lock switch (277) out of the locked position (280) in the case of movement into the released state.

6. Parking lock gear mechanism (150) according to Claim 5, **characterized in that** the tappet (267) has a cone element (272) which is designed or arranged in such a way as to be supported on a securing wall (275) in order to press the parking lock switch (277) into the locked position (280).

7. Parking lock gear mechanism (150) according to one of the preceding claims, **characterized in that** the securing unit (215) has a worm gear.

8. Parking lock gear mechanism (150) according to one of the preceding claims, **characterized by** a drive unit (230) which is coupled to the sun gear (220), in particular wherein the drive unit (230) comprises an electric motor (232) and/or is connected to the sun gear (220), and/or in the currentless or voltageless state the drive unit (230) locks a rotation of the sun gear (220).

9. Parking lock gear mechanism (150) according to Claim 8, **characterized in that** the drive unit (230) has a worm gear (225) for transmitting a rotational movement to the sun gear (220).

10. Parking lock gear mechanism (150) according to one of the preceding claims, **characterized in that** the spring (245) is a helical spring (245) or a metallic spring.

11. Method (700) for operating a parking lock gear mechanism (150) according to one of the preceding claims, wherein the method has the following steps:
locking (710) a rotation of the planetary carrier (237);
tensioning (720) the spring unit (205); and
switching over (730) the ring-gear-securing unit (210) into the first operating state.

12. Computer program product having program code for carrying out and/or actuating the steps of the method (700) according to Claim 11 when the computer program product is executed on a parking lock gear mechanism control unit (155).

13. Machine-readable storage medium in which the computer program product according to Claim 12 is stored.

14. Parking lock gear mechanism control unit (155) which is configured to execute and/or actuate the steps of the method (700) according to Claim 11 in corresponding units (600, 610, 620).

## Revendications

1. Engrenage de frein de stationnement (150) destiné à actionner une unité de frein de stationnement (145) d'un véhicule, l'engrenage de frein de stationnement (150) possédant les caractéristiques suivantes :
un engrenage planétaire (200), qui possède une roue solaire (220), une couronne de train planétaire (240) et au moins un satellite (235) qui s'engrène avec la roue solaire (220) et la couronne de train planétaire (240), l'au moins un satellite (235) étant fixé à un porte-satellite (237) monté à rotation ;
une unité à ressort (205) qui est couplée à la couronne de train planétaire (240), l'unité à ressort (205) étant configurée pour être tendue par une rotation de la couronne de train planétaire (240) et, dans l'état tendu, exercer un couple et/ou une force sur la couronne de train planétaire (240) ;
une unité d'immobilisation de couronne de train planétaire (210) qui est configurée pour, dans un premier état opérationnel, immobiliser la couronne de train planétaire (240) contre une rotation et, dans un deuxième état opérationnel, libérer une rotation de la couronne de train planétaire (240) ; et
une unité d'arrêt (215) couplée au porte-satellite (237), laquelle est configurée pour, lors d'une rotation du porte-satellite (237), permuter l'unité de frein de stationnement (145) du véhicule (100) entre un état bloqué et un état libéré ;
**caractérisé en ce que**
l'unité d'arrêt (215) comporte une espagnolette (265) ayant une liaison de configuration excentrique avec le porte-satellite (237), laquelle est couplée à un poussoir (267) de sorte que l'unité d'arrêt (215) est configurée pour convertir une rotation du porte-satellite (237) en un mouvement linéaire du poussoir (267) ;
et **en ce que** l'unité à ressort (205) possède un ressort (245) qui est calé d'un côté contre un point de calage (250) et de l'autre côté contre un point de butée (255) sur la couronne de train planétaire (240).

2. Engrenage de frein de stationnement (150) selon la revendication 1, **caractérisé en ce que** l'unité d'immobilisation de couronne de train planétaire (210) possède un actionneur électrique (260) qui est configuré pour amener l'unité d'immobilisation de couronne de train planétaire (210) dans un état électriquement déconnecté et/ou hors tension dans le deuxième état opérationnel.

3. Engrenage de frein de stationnement (150) selon la revendication 2, **caractérisé en ce que** l'actionneur électrique (260) est un électroaimant et/ou possède une partie saillante (262) qui vient en prise dans une portion de dent de la couronne de train planétaire (240).

4. Engrenage de frein de stationnement (150) selon la revendication 3, **caractérisé en ce que** l'unité d'arrêt (215) possède un élément de butée (285) qui est configuré pour limiter une course de mouvement du poussoir (267), l'unité d'arrêt (215) étant en outre configurée pour immobiliser le porte-satellite (237) en rotation lors d'une application du poussoir (267) contre l'élément de butée.

5. Engrenage de frein de stationnement (150) selon la revendication 1 ou 4, **caractérisé en ce que** le poussoir (267) est configuré pour, lors d'un mouvement dans un état bloqué de l'unité de frein de stationnement (145), pousser un commutateur de frein de stationnement (277) dans une position de retenue (280) au niveau d'au moins un tenon de maintien (282) et, lors d'un mouvement dans l'état libéré, libérer un mouvement du commutateur de frein de stationnement (277) hors de la position de retenue (280).

6. Engrenage de frein de stationnement (150) selon la revendication 5, **caractérisé en ce que** le poussoir (267) possède un élément conique (272) qui est configuré ou disposé pour prendre appui sur une paroi de maintien (275) afin de pousser le commutateur de frein de stationnement (277) dans la position de retenue (280).

7. Engrenage de frein de stationnement (150) selon l'une des revendications précédentes, **caractérisé en ce que** l'unité d'arrêt (215) possède un engrenage à vis sans fin.

8. Engrenage de frein de stationnement (150) selon l'une des revendications précédentes, **caractérisé par** une unité d'entraînement (230) couplée à la roue solaire (220), l'unité d'entraînement (230) comportant notamment un moteur électrique (232) et/ou étant notamment reliée à la roue solaire (220) et/ou l'unité d'entraînement (230) à l'état électriquement déconnecté et/ou hors tension bloquant une rotation de la roue solaire (220).

9. Engrenage de frein de stationnement (150) selon la revendication 8, **caractérisé en ce que** l'unité d'entraînement (230) possède un engrenage à vis sans fin (225) destiné à transmettre un mouvement de rotation à la roue solaire (220).

10. Engrenage de frein de stationnement (150) selon l'une des revendications précédentes, **caractérisé en ce que** le ressort (245) est un ressort hélicoïdal (245) ou un ressort métallique.

11. Procédé (700) pour faire fonctionner un engrenage de frein de stationnement (150) selon l'une des revendications précédentes, le procédé comprenant les étapes suivantes :
blocage (710) d'une rotation du porte-satellite (237) ;
mise en tension (720) de l'unité à ressort (205) ; et
permutation (730) de l'unité d'immobilisation de couronne de train planétaire (210) dans le premier état opérationnel.

12. Produit de programme informatique comprenant un code de programme destiné à exécuter et/ou à commander les étapes du procédé (700) selon la revendication 11 lorsque le produit de programme informatique est exécuté sur une unité de commande d'engrenage de frein de stationnement (155).

13. Support d'enregistrement lisible par machine sur lequel est enregistré le produit de programme informatique selon la revendication 12.

14. Unité de commande d'engrenage de frein de stationnement (155) qui est conçue pour exécuter et/ou commander les étapes du procédé (700) selon la revendication 11 dans des unités (600, 610, 620) correspondantes.
